# EUROPEAN PATENT APPLICATION

(11) **EP 1 630 809 A1**
(43) Date of publication of application: **01.03.2006**
(21) Application number: 04745521.7
(22) Date of filing: 02.06.2004
(51) Int. Cl.: G11B 23/03

(54) **OPTICAL DISK CARTRIDGE**

(30) Priority: 05.06.2003 JP 2003160440
(71) Applicant: TDK Corporation, Tokyo 103-8272 (JP)
(72) Inventor: YAMADA, Takashi c/o TDK CORPORATION, Tokyo 103-8272 (JP); KOMAKI, Tsuyoshi c/o TDK CORPORATION, Tokyo 103-8272 (JP); YAMAGA, Kenji c/o TDK CORPORATION, Tokyo 103-8272 (JP)
(74) Representative: Geyer, Ulrich F.
(86) International application number: PCT/JP2004/007622
(87) International publication number: WO 2004/109695

(57) **Abstract**

An optical disc cartridge is provided, which can accommodate an optical disc having a substrate and a light-transmitting layer thinner than the substrate and can suppress warpage of the optical disc within a predetermined limit value.

The optical disc cartridge 32 is provided with an opening 20 on one side in a thickness direction and an opening 34 on the other side. An area of each opening is set to be 1/4 or more of an area of the optical disc 16. Moreover, a ratio of the area of the opening 20 to the area of the opening 34 is set to be larger than 1/4 and smaller than 4.

## Description

### TECHNICAL FIELD

The present invention relates to an optical disc cartridge for accommodating a large-capacity optical disc having a substrate and a light-transmitting layer thinner than the substrate, and an optical recording medium.

### BACKGROUND ART

Recording density of an optical disc can be increased by shortening a wavelength of laser light and making a numerical aperture NA of an objective lens larger, thereby enabling to increase the recording capacity thereof. On the other hand, as the wavelength of the laser light is shorter and the numerical aperture of the objective lens is larger, accuracy of recording and reproducing information tends to decrease because of generation of coma aberration. However, when the thickness of a light-transmitting layer is made thinner, margin for inclination (warpage) of the optical disc is assured and therefore the accuracy of recording and reproducing information can be maintained.

In recent years, an optical disc has attracted attention, in which laser light having a short wavelength, i.e., blue-violet laser light having a wavelength of about 405 nm is used and a numerical aperture NA is increased to about 0.85 in order to largely increase the capacity of the optical disc. Moreover, in accordance with the above wavelength and numerical aperture, a light-transmitting layer having a thickness of about 0.1 mm, which is thinner than a substrate having a' thickness of about 1.1 mm, is formed on the substrate (see Japanese Patent Laid-Open Publication No. 2003-85836, for example).

This type of optical disc is manufactured by forming the light-transmitting layer by spin coating on the substrate formed by injection molding, for example. That is, the substrate and the light-transmitting layer are different in thickness and manufacturing method. Therefore, materials for them are different from each other in some cases.

Moreover, this type of optical disc has high recording density, and dust, scar, or the like can easily affect the accuracy of recording and reproducing information. Thus, a cartridge in a form of a thin box may be used. The cartridge has an opening for communication with the optical disc, and can be set in recording and/or reproducing device while accommodating the optical disc therein. An opening for printing on the optical disc or allowing for removal and attachment of the optical disc may be further provided in addition to the opening for communication.

This type of optical disc has a structure in which the substrate and the light-transmitting layer that are different in material and thickness are combined. Thus, warpage of the optical disc can easily occur with a rapid temperature change occurring in a short time. For example, when an optical disc that is placed in an outdoor location in winter and is therefore cooled to a temperature near an outside air temperature is set in a video camera or the like that is heated by applying a current thereto, an environmental temperature of the optical disc increases by several tens of degrees in several seconds. This increase in the environmental temperature may cause warpage of the optical disc. Moreover, when an optical disc that is placed in an outdoor location in summer and is therefore heated to a temperature near an outside air temperature is set in a recording and/or reproducing device.or the like that is placed in an air-conditioned room and is therefore cooled, the environmental temperature of the optical disc decreases by several tens of degrees in several seconds. This decrease in the environmental temperature may cause warpage of the optical disc. In the case where warpage of the optical disc is large, an error can easily occur in recording and/or reproducing information. Therefore, it is necessary to suppress the warpage within a predetermined limit value.

Suppression of the warpage within the predetermined limit value can be achieved by improving the configuration of the disc, for example, by forming a layer having an approximately the same coefficient of thermal expansion as that of the light-transmitting layer on an opposite surface of the substrate to the light-transmitting layer.

However, even in the case where warpage of an lone optical disc is suppressed within the predetermined limit value, warpage exceeding the predetermined limit value may occur in the optical disc when the optical disc is accommodated in the cartridge.

### DISCLOSURE OF THE INVENTION

In view of the foregoing problems, various exemplary embodiments of this invention provide an optical disc cartridge which can accommodate an optical disc having a substrate and a light-transmitting layer thinner than the substrate and can suppress warpage of the optical disc within a predetermined limit value.

The inventors earnestly studied a reason why, even in the case where warpage of an lone optical disc was suppressed within a predetermined limit value, warpage exceeding the predetermined limit value occurred in the optical disc when the optical disc was accommodated in a cartridge. As a result of the studies, the inventors found that, when an environmental temperature rapidly changed in a short time, temperature distribution in the optical disc accommodated in the cartridge became uneven as compared with that of the lone optical disc, thus making warpage larger.

In the case where an optical disc is accommodated in a cartridge having an opening only on one side, for example, when the environmental temperature rapidly changes, a temperature on an opening-side surface of the optical disc becomes close to the environmental temperature relatively rapidly and a temperature on an opposite surface becomes close to the environmental temperature behind the opening-side surface. That is, the temperature distribution in the optical disc temporarily becomes uneven in a thickness direction. This unevenness may cause warpage exceeding its accepted value.

Moreover, in case of a cartridge having openings on both sides, the temperature distribution in the optical disc also becomes uneven in the thickness direction temporarily when a difference in area between the openings is large. This unevenness may cause warpage exceeding its accepted value.

In addition, the optical disc is chucked when being set in recording and/or reproducing device. A region of the optical disc near its center that is in contact with a chuck mechanism can conduct heat more easily than another region. Thus, a temperature in the region near the center becomes close to the temperature of the recording and/or reproducing device rapidly. In other words, the temperature distribution in the optical disc temporarily becomes uneven in a radial direction. This unevenness may cause warpage exceeding its accepted value.

Based on the aforementioned consideration, the present invention provides a cartridge with a suitable opening for suppressing a variation in temperature distribution in an optical disc to be small even when an environmental temperature changes, thereby suppressing warpage of the optical disc in the cartridge within a predetermined acceptable value.

The aforementioned object can be achieved by the invention described below.
(1). An optical disc cartridge in a form of a thin box for accommodating an optical disc having a substrate and a light-transmitting layer thinner than the substrate, wherein one side of the optical disc cartridge in a thickness direction is closed, an opening is provided on another side of the optical disc cartridge in the thickness direction, and an area of the opening is 1/4 or more and smaller than 1/2 of an area of the optical disc.
(2). An optical disc cartridge in a form of a thin box for accommodating an optical disc having a substrate and a light-transmitting layer thinner than the substrate, wherein openings are provided on both sides of the optical disc cartridge in a thickness direction, respectively, and an area of each of the openings is 1/4 or more of an area of the optical disc.
(3). The optical disc cartridge according to (2), wherein a ratio of the area of the opening on one side in the thickness direction to the area of the opening on the other side is larger than 1/4 and smaller than 4.
(4). The optical disc cartridge according to (2), wherein a ratio of the area of the opening on one side in the thickness direction to the area of the opening on the other side is larger than 1/2 and smaller than 2.
(5). The optical disc cartridge according to any one of (2) to (4), wherein the openings provided on both sides of the optical disc cartridge in the thickness direction are formed to have a symmetrical shape each other in the thickness direction.
(6). The optical disc cartridge according to any one of (2) to (5), wherein the opening on at least one side in the thickness direction comprises a plurality of holes.
(7). The optical disc cartridge according to (6), wherein the opening is formed like a mesh.
(8) The optical disc cartridge according to any one of (2) to (7), wherein further including a first shutter for opening and closing the opening on one side in the thickness direction and a second shutter for opening and closing the opening on the other side in the thickness direction.
(9) The optical disc cartridge according to (8), wherein the first shutter and the second shutter interlock with each other to be opened and closed.
(10) The optical disc cartridge according to any one of (1) to (9), wherein the opening is formed by a communication hole for communication between the optical disc and an external head and a hole for ventilation.
(11). An optical recording medium comprising the optical disc cartridge according to any one of (1) to (10) and the optical disc accommodated in the optical disc cartridge.

### BRIEF DESCRIPTION OF THE DRAWINGS

Fig. 1 is a schematic cross-sectional side view showing the configuration of an optical recording medium according to a first exemplary embodiment of the present invention.
Fig. 2 is a bottom view of the optical recording medium of the first exemplary embodiment.
Fig. 3 is a schematic cross-sectional side view showing the configuration of an optical recording medium according to a second exemplary embodiment of the present invention.
Fig. 4 is a bottom view of the optical recording medium of the second exemplary embodiment.
Fig. 5 is a plan view of the optical recording medium of the second exemplary embodiment.
Fig. 6 is a schematic cross-sectional side view showing the configuration of an optical recording medium according to a third exemplary embodiment of the present invention.
Fig. 7 is a plan view of the optical recording medium of the third exemplary embodiment.
Fig. 8 is a schematic cross-sectional side view showing the configuration of an optical recording medium according to a fourth exemplary embodiment of the present invention.
Fig. 9 is a plan view of the optical recording medium of the fourth exemplary embodiment.
Fig. 10 is a schematic cross-sectional side view showing the configuration of an optical recording medium according to a fifth exemplary embodiment of the present invention.
Fig. 11 is a plan view of the optical recording medium of the fifth exemplary embodiment.
Fig. 12 is a schematic cross-sectional side view showing the configuration of an optical recording medium according to a sixth exemplary embodiment of the present invention.
Fig. 13 is a bottom view of the optical recording medium of the sixth exemplary embodiment.
Fig. 14 is a schematic cross-sectional side view showing the configuration of an optical recording medium according to a seventh exemplary embodiment of the present invention.
Fig. 15 is a bottom view of the optical recording medium of the seventh exemplary embodiment.
Fig. 16 is a graph showing whether an optical disc of each optical recording medium according to Working Example of the present invention is good or bad.

### Best Mode for carryING out the Invention

Preferred exemplary embodiments of the present invention will now be described in detail, with reference to the drawings.

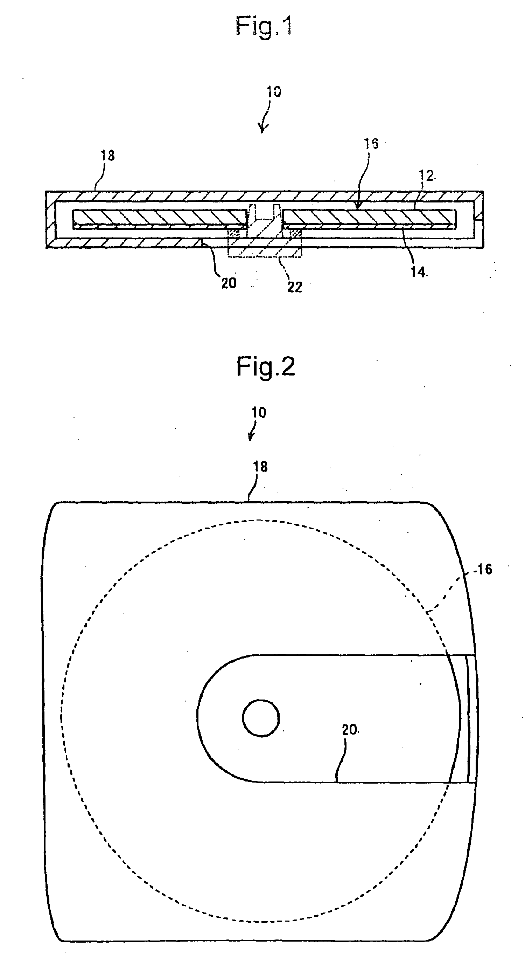

Fig. 1 is a schematic cross-sectional side view showing the configuration of an optical recording medium 10 according to a first exemplary embodiment of the present invention, and Fig. 2 is a bottom view of the optical recording medium 10.

The optical recording medium 10 includes an optical disc 16 having a substrate 12 and a light-transmitting layer 14 thinner than the substrate 12, and an optical disc cartridge 18 for accommodating the optical disc 16. The optical recording medium 10 has a feature in the structure of the optical disc cartridge 18.

The structure of the optical disc 16 is the same as a conventional optical disc and therefore the description thereof is omitted.

The optical disc cartridge 18 is an approximately square thin box that is closed on one side in a thickness direction. An opening 20 is provided on the other side of the optical disc cartridge 18 in the thickness direction, and exposes the light-transmitting layer 14 of the optical disc 16 to the outside in order to allow for communication between the optical disc 16 and an external head (not shown). The area of the opening 20 is about 1/3 (1/4 or more and smaller than 1/2) of the area of the optical disc 16.

Specifically, the opening 20 has an approximately U-shape and is formed on a rear surface of the optical disc cartridge 18 from a region near a center to a front end (a right end in Figs. 1 and 2) of the optical disc cartridge 18 in such a manner that an end of a semi-circular portion of the opening 20 is arranged concentrically with respect to the optical disc 16.

Reference numeral 22 in Fig. 1 represents a driving mechanism of a recording and/or reproducing device (not shown).

Next, an operation of the optical recording medium 10 will be described.

When a recording and/or reproducing device is loaded with the optical recording medium 10, the driving mechanism 22 comes into contact with the region of the optical disc 16 near the center.

If a difference between the temperature of the optical recording medium 10 before loading and the internal temperature of the recording and/or reproducing device is small, a temperature change in the optical disc 16 between before and after loading is small and temperature distribution in the optical disc 16 is kept even. Therefore, large warpage does not occur in the optical disc 16.

On the other hand, if the difference between the temperature of the optical recording medium 10 before loading and the internal temperature of the recording and/or reproducing device is large, the temperature of the optical disc 16 largely changes so as to become close to the internal temperature of the recording and/or reproducing device.

The temperature in the region of the optical disc 16 near the center becomes close to the internal temperature of the recording and/or reproducing device relatively rapidly mainly because of direct heat transfer between that region and the driving mechanism 22.

On the other hand, a temperature change in another region (a region outer than the region near the center in a radial direction) of the optical disc 16 is caused mainly by heat transfer through ambient atmosphere. Thus, the temperature in the other region becomes close to the internal temperature of the recording and/or reproducing device slightly behind the region near the center. However, the area of the opening 20 is about 1/3 (1/4 or more) of the area of the optical disc 16. Therefore, the temperature in the other region becomes close to the internal temperature of the recording and/or reproducing device without largely lagging behind the temperature change in the region near the center. Therefore, a large variation in the temperature distribution in the optical disc 16 does not occur in the radial direction.

The opening 20 has an approximately U-shape and exposes only a part of the optical disc 16 to the outside. However, the temperature distribution in the optical disc 16 in a circumferential direction is even because the optical disc 16 rotates and is entirely exposed to the ambient atmosphere.

Moreover, one side of the optical disc cartridge 18 is closed. Thus, the light-transmitting layer 14 side of the optical disc 16 is exposed to a relatively large amount of ambient atmosphere, whereas a small amount of ambient atmosphere comes into contact with the opposite side of the optical disc 16 to the light-transmitting layer 14. Due to this, a temperature change on the opposite side occurs slightly behind the temperature change on the light-transmitting layer side. However, the area of the opening 20 is about 1/3 (smaller than 1/2) of the area of the optical disc 16 and the amount of ambient atmosphere coming into contact with the light-transmitting layer 14 side of the optical disc 16 is limited. Therefore, a large variation in the temperature distribution in the optical disc 16 does not occur in the thickness direction.

Accordingly, a large variation in the temperature distribution in the optical recording medium 10 does not occur in any of the radial direction, the circumferential direction, and the thickness direction. Therefore, warpage exceeding its accepted value does not occur in the optical disc 16.

Next, a second exemplary embodiment of the present invention will be described.

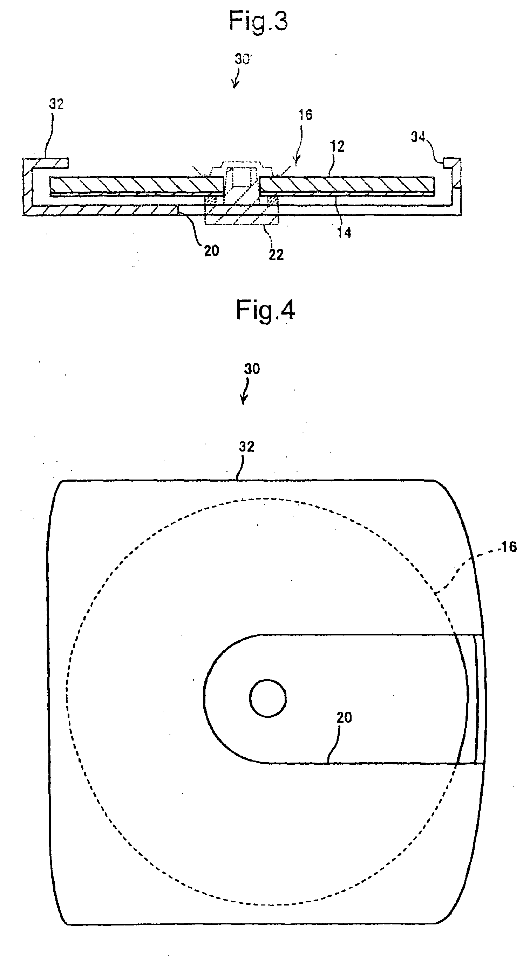

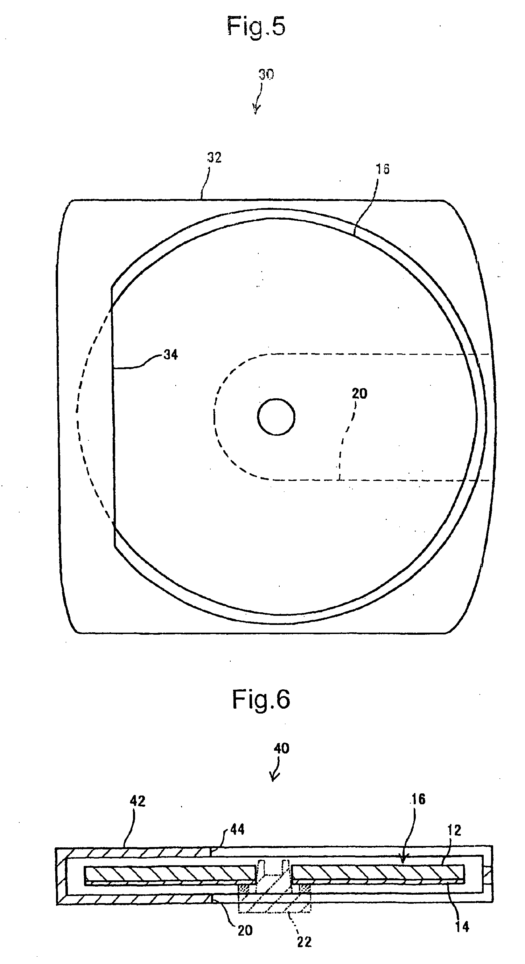

Fig. 3 is a schematic cross-sectional side view showing the configuration of an optical recording medium 30 according to the second exemplary embodiment, and Figs. 4 and 5 are a bottom view and a plan view of the optical recording medium 30, respectively.

The optical recording medium 30 has features that an optical disc cartridge 32 is provided with an opening 20 on one side in the thickness direction and an opening 34 that is opened to the other side in the thickness direction, and the area of each of the openings 20 and 34 is 1/4 or more of the area of the optical disc 16, in contrast to the optical recording medium 10 of the first exemplary embodiment.

Moreover, the optical recording medium 30 has a feature that a ratio of the area of the opening 20 to the area of the opening 34 is about 1/3 (larger than 1/4 and smaller than 4).

Except for the above, the optical recording medium 30 is the same as the optical recording medium 10. Thus, the same parts in Figs. 1 and 2 are labeled with the same reference numerals and the description thereof is omitted.

Specifically, the opening 34 has a shape formed by an arc slightly larger than the optical disc 16 and a straight chord near a rear end (a left end in Fig. 5) of that arc, and has an area approximately equal to the area of the optical disc 16.

The optical disc 16 can pass through the opening 34. The optical recording medium 30 is designed to allow the optical disc 16 to be removed from the optical disc cartridge 32. Moreover, it is possible to perform printing on the optical disc 16 through the opening 34.

An operation of the optical recording medium 30 will now be described.

When a recording and/or reproducing device is loaded with the optical recording medium 30, a driving mechanism 22 comes into contact with a region of the optical disc 16 near its center.

If a difference between the temperature of the optical recording medium 30 before loading and the internal temperature of the recording and/or reproducing device is small, a temperature change in the optical disc 16 between before and after loading is small and temperature distribution in the optical disc 16 is kept even. Therefore, large warpage does not occur in the optical disc 16.

On the other hand, if the difference between the temperature of the optical recording medium 30 and the internal temperature of the recording and/or reproducing device is large, the temperature of the optical disc 16 largely changes so as to become close to the internal temperature of the recording and/or reproducing device.

The optical disc cartridge 32 is provided with the opening 34 and the opening 20 and therefore the optical disc 16 is exposed to ambient atmosphere outside the optical disc cartridge 32 (inside the recording and/or reproducing device) on both sides. The opening 34 of the optical disc cartridge 32 has a larger area than the opening 20 and therefore an opposite side of the optical disc 16 to the light-transmitting layer 14 is exposed to a larger amount of ambient atmosphere than the light-transmitting layer 14 side of the optical disc 16. However, the ratio of the area of the opening 20 to the area of the opening 34 is about 1/3 (larger than 1/4 and smaller than 4). Therefore, a difference of heat transfer between both surfaces of the optical disc 16 is limited to be small, and a large variation does not occur in the temperature distribution in the optical disc 16 in the thickness direction.

Since a part of the opening 34 is formed as a chord, a part of the optical disc 16 is not exposed to the outside. However, a large variation does not occur in the temperature distribution in the optical disc 16 in the circumferential direction because the optical disc 16 rotates and is therefore exposed to the ambient atmosphere entirely. This is the same as for the opening 20.

Moreover, the region of the optical disc 16 near its center is in contact with the driving mechanism 22 and can easily conduct heat. Thus, the temperature in the region near the center becomes close to the internal temperature of the recording and/or reproducing device relatively rapidly. On the other hand, heat is conducted to another region of the optical disc 16 through the ambient atmosphere. However, the temperature in the other region also becomes close to the internal temperature of the recording and/or reproducing device without largely lagging behind the temperature change in the region near the center, because each of the openings 20 and 34 has an area that is 1/4 or more of the area of the optical disc 16. Therefore, a large variation does not occur in the temperature distribution in the optical disc 16 in the radial direction.

Namely, in the optical recording medium 30, a large variation does not occur in the temperature distribution in the optical disc 16 in any of the radial direction, the circumferential direction, and the thickness direction. Thus, warpage exceeding its accepted value does not occur in the optical disc 16.

A third exemplary embodiment of the present invention will now be described.

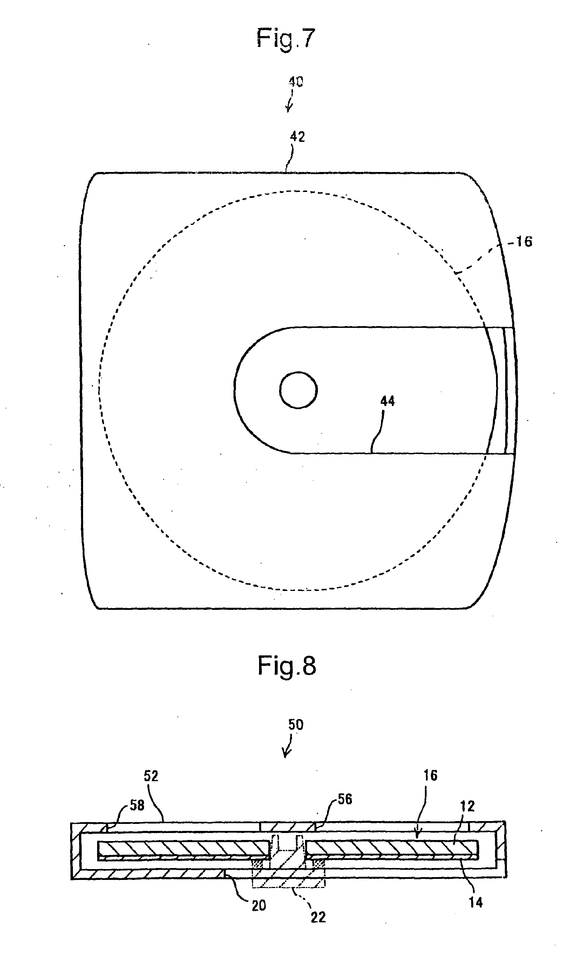

Fig. 6 is a schematic cross-sectional side view showing the configuration of an optical recording medium 40 according to the third exemplary embodiment, and Fig. 7 is a plan view of the optical recording medium 40.

The optical recording medium 40 has a feature that an opening 20 on one side of an optical disc cartridge 42 in the thickness direction and an opening 44 on the other side are formed to have symmetrical shapes each other in the thickness direction, in contrast to the second exemplary embodiment. Except for the above, the third exemplary embodiment is the same as the second exemplary embodiment and therefore the description thereof is omitted.

Since the optical disc cartridge 42 is provided with the openings 20 and 44 that are symmetrical each other in the thickness direction as described above, a variation in the temperature distribution in the optical disc 16 in the thickness direction can be limited to be very small even when the environmental temperature rapidly changes in a short time. Therefore, warpage of the optical disc 16 can be suppressed to a very small value.

The optical recording medium 40 is suitable for a cartridge for a double-sided recording type optical disc that has a light-transmitting layer and a recording layer on each side.

A fourth exemplary embodiment of the present invention will now be described.

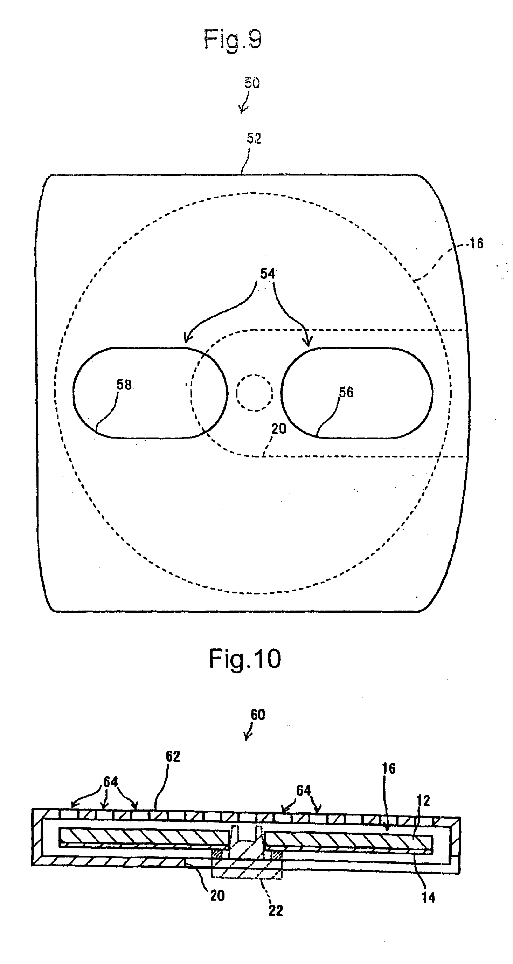

Fig. 8 is a schematic cross-sectional side view showing the configuration of an optical recording medium 50 according to the fourth exemplary embodiment, and Fig. 9 is a plan view of the optical recording medium 50.

In contrast to the second exemplary embodiment, the optical recording medium 50 has features that an opening 20 that is the same as that in the second exemplary embodiment is provided on one side of an optical disc cartridge 52 in the thickness direction and an opening 54 provided on the other side comprises a plurality of (two in the fourth exemplary embodiment) holes 56 and 58. Except for the above, the fourth exemplary embodiment is the same as the second exemplary embodiment and the description thereof is omitted.

The total area of the opening 54 that is a sum of the areas of the holes 56 and 58 is 1/4 or more and smaller than 1/2 of the area of the optical disc 16. Moreover, a ratio of the total area of the opening 54 to the area of the opening 20 is larger than 1/2 and smaller than 2.

When the opening 54 comprises a plurality of holes 56 and 58 as described above, the degree of freedom of designing the opening can be made larger. Thus, it is possible to provide a suitable opening for reducing warpage of the optical disc 16 more easily. In addition, it is easy to design the opening in accordance with a purpose of the opening, such as printing. Furthermore, the opening 54 is divided into a plurality of holes 56 and 58, and the area of each of the openings 56 and 58 is small even when the area of the opening 54 is large. Therefore, an effect of reducing entry of dust or the like into the optical disc cartridge 52 can be obtained.

A fifth exemplary embodiment of the present invention is now described.

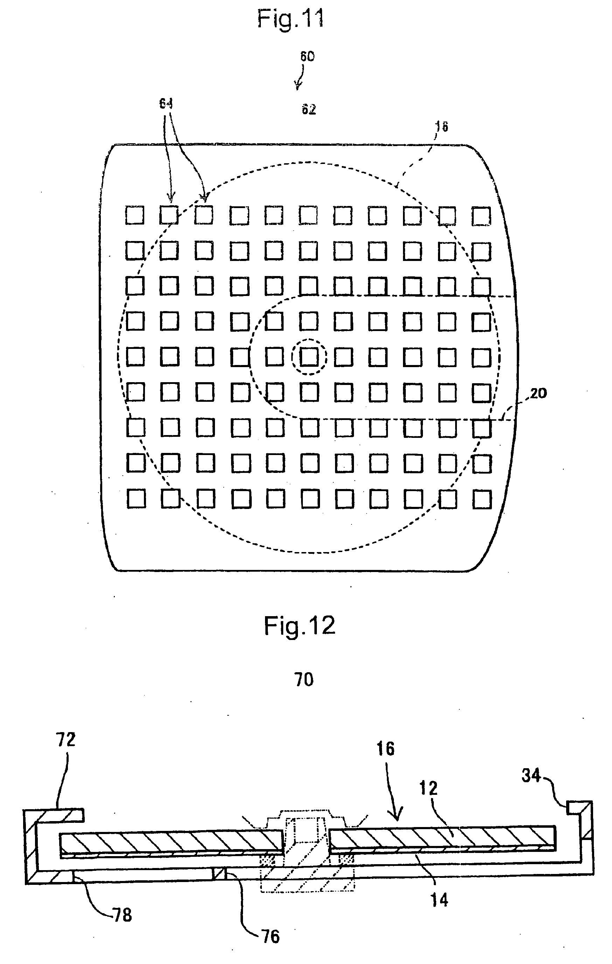

Fig. 10 is a schematic cross-sectional side view showing the configuration of an optical recording medium 60 of the fifth exemplary embodiment, and Fig. 11 is a plan view of the optical recording medium 60.

In contrast to the fourth exemplary embodiment, the optical recording medium 60 has a feature that an opening 20 that is the same as that in the second exemplary embodiment is provided on one side of an optical disc cartridge 62 in the thickness direction and an opening 64 provided on the other side is formed like a mesh. Except for the above, the fifth exemplary embodiment is the same as the second exemplary embodiment and therefore the description thereof is omitted.

The total area of the mesh-like opening 64 is 1/4 or more and smaller than 1/2 of the area of the optical disc 16. A ratio of the total area of the opening 64 to the area of the opening 20 is larger than 1/2 and smaller than 2.

Dust or the like entering into the optical disc cartridge 52 can be further reduced by forming the opening 64 like a mesh in the above-described manner, as compared with the fourth exemplary embodiment.

A sixth exemplary embodiment of the present invention will now be described.

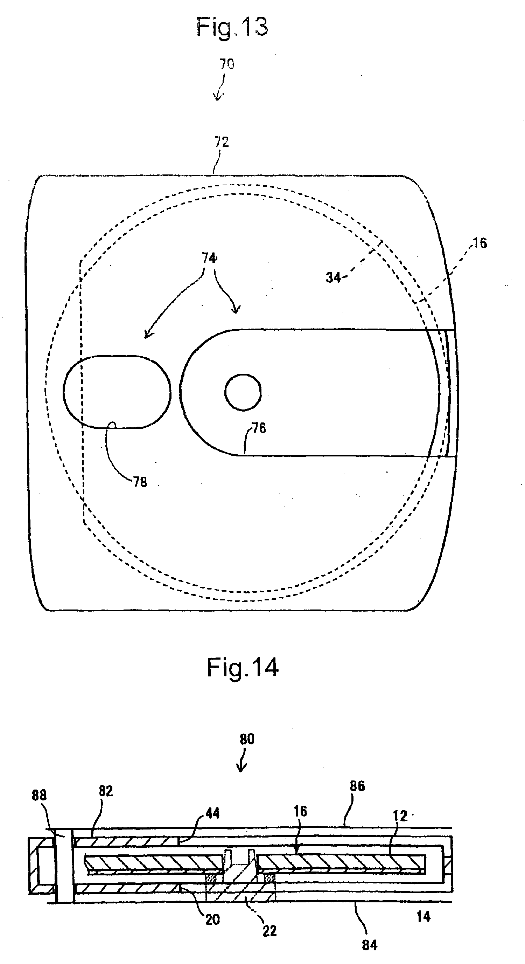

Fig. 12 is a schematic cross-sectional side view showing the configuration of an optical recording medium 70 according to the sixth exemplary embodiment, and Fig. 13 is a bottom view of the optical recording medium 70.

The optical recording medium 70 has a feature that an opening 74 on one side of an optical disc cartridge 72 in the thickness direction is composed of a communication hole 76 used for communication (that has the same shape as that of the opening 20) and a ventilation hole 78, in contrast to the second exemplary embodiment. The optical disc cartridge 72 is also provided with the opening 34 that is the same as that in the second exemplary embodiment on the other side in the thickness direction. Except for the above, the sixth exemplary embodiment is the same as the second exemplary embodiment and therefore the description thereof is omitted.

The total area of the opening 74 that is a sum of the area of the communication hole 76 and the area of the ventilation hole 78 is 1/4 or more and smaller than 1/2 of the area of the optical disc 16. Moreover, a ratio of the total area of the opening 74 to the area of the opening 30 is larger than 1/4 and smaller than 4.

The degree of freedom of designing the opening can be made larger by the opening 74 comprising the communication hole 76 and the ventilation hole 78 in the above-described manner. Thus, it is possible to provide a suitable opening for reducing warpage of the optical disc 16 more easily. Moreover, when the opening 74 comprises the communication hole 76 and the ventilation hole 78, the area of the communication hole 76 and the area of the ventilation hole 78 are small even if the area of the opening 74 is large. Thus, the effect for reducing dust or the like entering into the optical disc cartridge 72 can be obtained. In addition, in the case where the ventilation hole is formed like a mesh as in the fifth exemplary embodiment, entering of dust or the like can be further suppressed.

A seventh exemplary embodiment of the present invention will now be described.

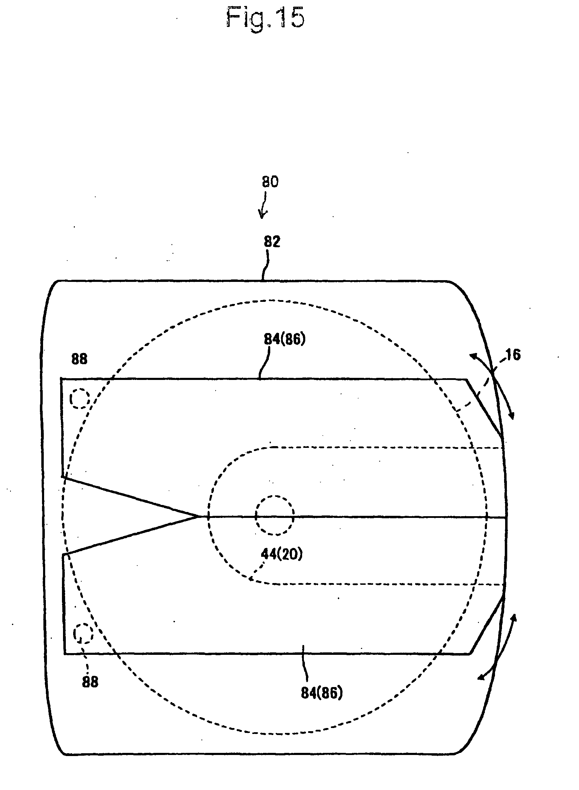

Fig. 14 is a schematic cross-sectional side view showing the configuration of an optical recording medium 80 according to the seventh exemplary embodiment, and Fig. 15 is a plan view of the optical recording medium 80.

The optical recording medium 80 has features that an optical disc cartridge 82 has a first shutters 84 for opening and closing an opening 20 provided on one side in the thickness direction and a second shutters 86 for opening and closing an opening 44 provided on the other side and the first and second shutters 84 and 86 interlock with each other to be opened and closed, in contrast to the third exemplary embodiment. Except for the above, the seventh exemplary embodiment is the same as the third exemplary embodiment and therefore the description thereof is omitted.

A pair of first shutters 84 each having a plate-like shape are arranged along a surface of the optical disc cartridge 82 on one side in the thickness direction. The pair of first shutters 84 are rotatably supported by pins 88 and can close and open the opening 20 by coming close to each other and getting away from each other.

The second shutter 86 also has a plate-like shape that is the same as the first shutter 84. A pair of second shutters 86 are arranged along a surface of the optical disc cartridge 82 on the other side in the thickness direction. The second shutters 86 are also supported by the pins 88 rotatably. Thus, the second shutters 86 can come close to each other and get away from each other so as to close and open the opening 44, while interlocking with the first shutters 84.

It is possible to surely prevent dust or the like from entering into the optical disc cartridge 82 by providing the first and second shutters 84 and 86 in the aforementioned manner. Moreover, since the first and second shutters 84 and 86 interlocks with each other to be opened and closed, the opening area of the opening 20 and the opening area of the opening 44 can be always equal to each other. Thus, warpage of the optical disc 16 caused by a change in an ambient temperature can be surely suppressed to a very small value.

It should be noted that the effect of reducing entry of dust or the like into the cartridge can be obtained to a certain degree even in a case where only one of the first and second shutters is provided.

### (Working Example)

A plurality of types of optical recording media that were different in an area of an opening of an optical disc cartridge were manufactured. Then, warpage of an optical disc was measured for each of those optical recording media.

Specifically, the area of the opening of the optical disc cartridge was set to be 0 %, 17 %, 25 %, 33 %, 50 %, 75 %, or 100 % of the area of the optical disc. A plurality of types of optical disc cartridges each of which included an opening having one of the above areas on both sides or one side in the thickness direction were manufactured. The optical discs of the same type were accommodated in the respective optical disc cartridges, thereby manufacturing the optical recording media.

An ambient temperature of each of those optical recording media was rapidly changed from -10°C to +55°C. Then, an angle of warpage of the optical disc in each optical recording medium was measured by a known measurement method.

Specifically, a machine for measuring an angle of warpage (LA-2000 manufactured by KEYENCE CORPORATION) was used in the measurement. While laser light was made incident on a 2-mm position on a surface of the optical disc on the light-transmitting layer side from an outer circumference (a 58-mm position from a center) to be parallel to an axial direction, a difference of an optical axis of the incident light and an optical axis of reflected light was measured as an angle of warpage α (deg). When an angle formed by a virtual surface of the optical disc in the case where no warpage occurs and a surface to be measured is assumed to be θ (deg), α and θ satisfy a relationship of α = 2θ.

Table 1 shows a relationship among a ratio A (%) of the area of the opening on one side in the thickness direction to the area of the optical disc of each optical recording medium, a ratio B (%) of the area of the opening on the other side to the area of the optical disc, a ratio of A to B A/B, and the angle of warpage α of the optical disc.

**[Table 1]**

| Ratio of an opening area to a disc area (%) | | Change amount of warpage α(deg) | Ratio of an area of an opening on one side to an area of an opening on the other side (A/B) |
|---|---|---|---|
| A | B | | |
| 0 | 0 | 0.77 | 0.00 |
| 0 | 17 | 0.92 | 0.00 |
| 0 | 33 | 0.62 | 0.00 |
| 0 | 50 | 0.78 | 0.00 |
| 0 | 75 | 0.9 | 0.00 |
| 0 | 100 | 1.04 | 0.00 |
| 17 | 17 | 0.62 | 1.00 |
| 17 | 50 | 0.72 | 0.34 |
| 17 | 75 | 0.75 | 0.23 |
| 25 | 25 | 0.6 | 1.00 |
| 25 | 50 | 0.63 | 0.50 |
| 25 | 66 | 0.65 | 0.38 |
| 25 | 75 | 0.68 | 0.33 |
| 25 | 100 | 0.89 | 0.25 |
| 33 | 33 | 0.45 | 1.00 |
| 33 | 75 | 0.35 | 0.44 |
| 33 | 100 | 0.6 | 0.33 |
| 50 | 50 | 0.5 | 1.00 |
| 50 | 75 | 0.44 | 0.67 |
| 50 | 100 | 0.46 | 0.50 |
| 75 | 75 | 0.28 | 1.00 |
| 75 | 100 | 0.39 | 0.75 |
| 100 | 100 | 0.23 | 1.00 |

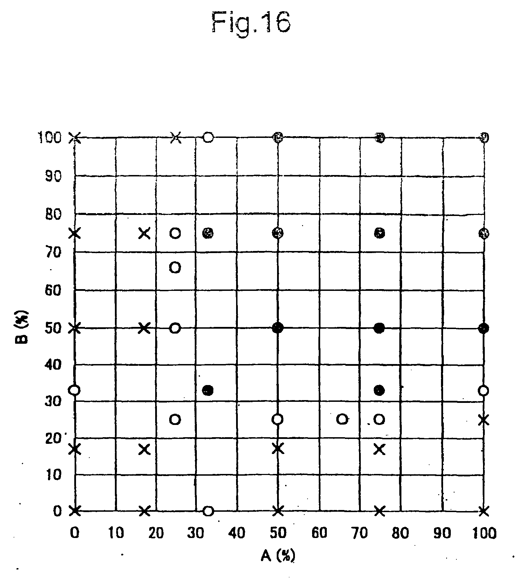

Fig. 16 is a graph in which a horizontal axis represents A and a vertical axis represents B. In Fig. 16, an especially favorable optical recording medium in which an angle of warpage α is 0.5 (deg) or less is represented with a black circle; a favorable optical recording medium in which the angle of warpage α is larger than 0.5 (deg) and is 0.7 (deg) or less is represented with a white circle; and an unfavorable optical recording medium in which the angle of warpage α is larger than 0.7 (deg) is represented with a cross.

Table 1 and Fig. 16 show that the angle of warpage α is limited to be 0.7 (deg) or less for the optical recording media in which both of the ratio A (%) of the area of the opening on one side in the thickness direction to the area of the optical disc and the ratio B (%) of the area of the opening on the other side to the area of the optical disc are 25 % (1/4) or more and A/B is larger than 1/4 and smaller than 4, and therefore those optical recording media are good.

Moreover, it is shown that the angle of warpage α is approximately limited to be 0.5 (deg) or less for the optical recording media in which the ratios A and B are 25 % (1/4) or more and A/B is larger than 1/2 and smaller than 2, and therefore those optical recording media are good.

In addition, it is shown that the angle of warpage α can be surely suppressed to be 0.5 (deg) or less when the ratios A and B are larger than 50% (1/2) and therefore those optical recording media are especially good.

Furthermore, it is shown that, even if one side of the optical disc cartridge in the thickness direction is closed, the angle of warpage α is 0.7 (deg) or less when the ratio of the area of the opening on the other side (to the area of the optical disc) is 25 % (1/4) or more and smaller than 50 % (1/2). Therefore, those optical recording media are good.

The structure in which the opening is always opened is described in each of the first to sixth exemplary embodiments. However, the present invention is not limited thereto. The shutter may be provided for the opening on at least one side in the thickness direction, as in the seventh exemplary embodiment. Since the optical disc 16 is a one-sided recording type in which the light-transmitting layer is provided on one side, it is preferable that the shutter be provided for the opening on the light-transmitting layer side in the case where the shutter is provided for the opening on one side only.

The optical disc 16 is a one-sided recording type in which the light-transmitting layer is provided on one side in the thickness direction in each of the first to seventh exemplary embodiments. However, the present invention is not limited thereto. The present invention can be also applied to a cartridge for accommodating a double-sided recording type optical disc.

### INDUSTRIAL APPLICABILITY

As described above, according to the present invention, an excellent effect can be obtained that warpage of an optical disc having a substrate and a light-transmitting layer thinner than the substrate can be suppressed within a predetermined limit value even when the optical disc is accommodated in an optical disc cartridge.

## Claims

1. An optical disc cartridge in a form of a thin box for accommodating an optical disc having a substrate and a light-transmitting layer thinner than the substrate, wherein one side of the optical disc cartridge in a thickness direction is closed, an opening is provided on another side of the optical disc cartridge in the thickness direction, and an area of the opening is 1/4 or more and smaller than 1/2 of an area of the optical disc.

2. An optical disc cartridge in a form of a thin box for accommodating an optical disc having a substrate and a light-transmitting layer thinner than the substrate, wherein openings are provided on both sides of the optical disc cartridge in a thickness direction, respectively, and an area of each of the openings is 1/4 or more of an area of the optical disc.

3. The optical disc cartridge according to claim 2, wherein
a ratio of the area of the opening on one side in the thickness direction to the area of the opening on the other side is larger than 1/4 and smaller than 4.

4. The optical disc cartridge according to claim 2, wherein a ratio of the area of the opening on one side in the thickness direction to the area of the opening on the other side is larger than 1/2 and smaller than 2.

5. The optical disc cartridge according to any one of claims 2 to 4, wherein
the openings provided on both sides of the optical disc cartridge in the thickness direction are formed to have a symmetrical shape each other in the thickness direction.

6. The optical disc cartridge according to any one of claims 2 to 5, wherein
the opening on at least one side in the thickness direction comprises a plurality of holes.

7. An optical recording medium comprising the optical disc cartridge according to any one of claims 1 to 6 and the optical disc accommodated in the optical disc cartridge.
